# EUROPEAN PATENT APPLICATION

(11) **EP 4 576 365 A1**
(43) Date of publication of application: **25.06.2025**
(21) Application number: 23854139.5
(22) Date of filing: 03.07.2023
(51) Int. Cl.: H01M 50/244, H01M 50/251, H01M 50/204, H02J 7/00, H02B 1/30, H02B 1/50, H02B 1/46, H02B 1/20

(54) **ENERGY STORAGE SYSTEM**

(30) Priority: 17.08.2022 CN 202222175392 U; 17.08.2022 CN 202222168701 U
(71) Applicant: BYD Company Limited, Shenzhen, Guangdong 518118 (CN)
(72) Inventor: SUI, Jiahai, Shenzhen, Guangdong 518118 (CN); YIN, Xueqin, Shenzhen, Guangdong 518118 (CN); CAO, Hu, Shenzhen, Guangdong 518118 (CN); YIN, Xiaoqiang, Shenzhen, Guangdong 518118 (CN)
(74) Representative: Mathys & Squire
(86) International application number: PCT/CN2023/105572
(87) International publication number: WO 2024/037234

(57) **Abstract**

An energy storage system (1000), comprising a battery assembly (201), a bearing frame (100), a power distribution device (400), and a junction device (300). An outer contour of the bearing frame (100) is configured in the shape of a container and defines an accommodation space used to accommodate and fix the battery assembly (201), and a mounting portion (1206) is formed on the bearing frame (100). The power distribution device (400) is adapted to connect to an external load so as to provide electrical energy to the external load. The junction device (300) is adapted to electrically connect the battery assembly (201) and the power distribution device (400). At least one of the power distribution device (400) and the junction device (300) is mounted on the mounting portion (1206) and is at least partially located in the outer contour, such that the energy storage system is easy to transport and has high energy density.

## Description

### CROSS-REFERENCE TO RELATED APPLICATIONS

The present disclosure claims priority to and benefits of Chinese Patent Application No. "202222175392.8", entitled "ENERGY STORAGE SYSTEM", and Chinese Patent Application No. "202222168701.9", entitled "ENERGY STORAGE DEVICE AND ENERGY STORAGE SYSTEM", filed on August 17, 2022. The entire content of the above-mentioned applications is incorporated herein by reference.

### FIELD

The present disclosure relates to the technical field of batteries, and in particular, to an energy storage system.

### BACKGROUND

With the development of electrochemical energy storage technology, energy storage has been applied more and more in power industries, for example, new energy projects such as wind and photovoltaic cause significant fluctuations in a power grid during grid connection due to limitations of natural environment. A large-scale energy storage system can effectively address power grid issues caused by the significant fluctuations. To meet capacity requirements, energy storage systems are usually bulky, and there are significant challenges in terms of site occupation during mounting and long-distance transportation through vehicles. Therefore, there is room for improvement.

### SUMMARY

The present disclosure is intended to solve one of the technical problems in a related art at least to some extent.

Therefore, the present disclosure provides an energy storage system.

The energy storage system according to the present disclosure includes: a battery assembly; a bearing frame, where an outer contour of the bearing frame is configured in a shape of a container and defines an accommodation space configured to accommodate and fix the battery assembly, and a mounting portion is formed on the bearing frame; a distribution device, adapted to connect an external load to provide electrical energy to the external load; and a junction device, adapted to electrically connect the battery assembly and the distribution device. At least one of the distribution device and the junction device is mounted on the mounting portion and is at least partially located in the outer contour.

In the energy storage system, the outer contour of the bearing frame is configured in the shape of the container, the bearing frame defines the accommodation space, and the battery assembly is accommodated and fixed in the accommodation space. Meanwhile, the mounting portion is further formed on the bearing frame. At least one of the distribution device and the junction device is mounted on the mounting portion and is at least partially located in the outer contour. In this way, the bearing frame cannot only serve as a mounting frame of the energy storage system to accommodate and fix the battery assembly, the junction device, and the distribution device, but also directly serve as a container unit to participate in transportation when configured in the shape of the container, so that hierarchical simplification of structural components can be achieved, thereby improving a space utilization rate and improving energy density. Meanwhile, structures such as the battery assembly, the distribution device, and the junction device still remain significant design freedom, which can still meet personalized designs of products while achieving unified contours.

Other aspects and advantages of the present disclosure will be given in the following descriptions, some of which will become apparent from the following descriptions or may be learned from practices of the present disclosure.

### BRIEF DESCRIPTION OF THE DRAWINGS

FIG. 1 is a schematic structural diagram of an energy storage system according to the present disclosure in an embodiment;
FIG. 2 is the energy storage system shown in FIG. 1, and shows contour dimensions;
FIG. 3 is a schematic structural diagram of a bearing frame in the energy storage system shown in FIG. 1;
FIG. 4 is a schematic structural diagram of an energy storage system according to the present disclosure in another embodiment;
FIG. 5 is a schematic decomposition diagram of a partial structure of an energy storage system according to the present disclosure in an embodiment;
FIG. 6 is a schematic assembly diagram of a bearing frame, a junction device, and a distribution device in the energy storage system shown in FIG. 5, where the bearing frame is shown in a broken view;
FIG. 7 is a schematic structural diagram of a battery cabinet in the energy storage system shown in FIG. 1 or FIG. 4;
FIG. 8 is an exploded view of the battery cabinet shown in FIG. 7, and a cabinet door of the battery cabinet is in an open state;
FIG. 9 is a schematic diagram of a partial structure of the battery cabinet shown in FIG. 7, and a cabinet door is in an open state;
FIG. 10 is a schematic structural diagram of multiple battery units in the battery cabinet shown in FIG. 7;
FIG. 11 is a schematic structural diagram of a battery cabinet in an energy storage system in a preferred embodiment;
FIG. 12 is a schematic structural diagram of a shelf of a battery unit in FIG. 11;
FIG. 13A is a schematic diagram of dimensions of a distribution box according to the present disclosure;
FIG. 13B is a schematic diagram of dimensions of another distribution box according to the present disclosure;
FIG. 13C is a schematic diagram of dimensions of another distribution box according to the present disclosure;
FIG. 14A is a schematic diagram of dimensions of a junction box according to the present disclosure;
FIG. 14B is a schematic diagram of dimensions of another junction box according to the present disclosure;
FIG. 14C is a schematic diagram of dimensions of another junction box according to the present disclosure;
FIG. 15 is a schematic structural diagram of an energy storage device according to the present disclosure;
FIG. 16A is a schematic diagram of dimensions of a distribution junction box according to the present disclosure;
FIG. 16B is a schematic diagram of dimensions of another distribution junction box according to the present disclosure; and
FIG. 16C is a schematic diagram of dimensions of another distribution junction box according to the present disclosure.

### DETAILED DESCRIPTION

Embodiments of the present disclosure are described below in detail, and examples of the embodiments are shown in accompanying drawings, where the same or similar reference numerals represent the same or similar elements or the elements having same or similar functions throughout the description. The embodiments described below with reference to the accompanying drawings are exemplary, and are intended to explain the present disclosure and cannot be construed as a limitation to the present disclosure.

First, it is to be noted that, the present disclosure is proposed based on the above-mentioned priority document, so terms of the above-mentioned priority document have been unified.
"Distribution device 400" in priority document "202222175392.8" and "distribution box 301" in priority document "202222168701.9" are the same component, and are named "distribution device 400" uniformly;
"junction device 300" in priority document "202222175392.8" and "junction box 302" in priority document "202222168701.9" are the same component, and are named "junction device 300" uniformly;
"bottom bracket 110" in priority document "202222175392.8" and "base 109" in priority document "202222168701.9" are the same component, and are named "bottom bracket 110" uniformly;
"cross beam 1202" in priority document "202222175392.8" and "first cross beam 108" in priority document "202222168701.9" are the same component, and are named "cross beam 1202" uniformly; and
"longitudinal beam 1201" in priority document "202222175392.8" and " first corner post 106" and "second corner post 107" in priority document "202222168701.9" are the same component, and are named "longitudinal beam 1201" uniformly.

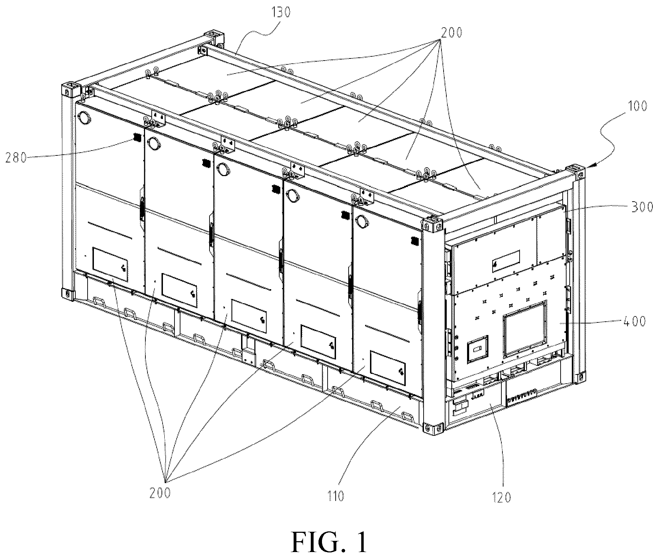

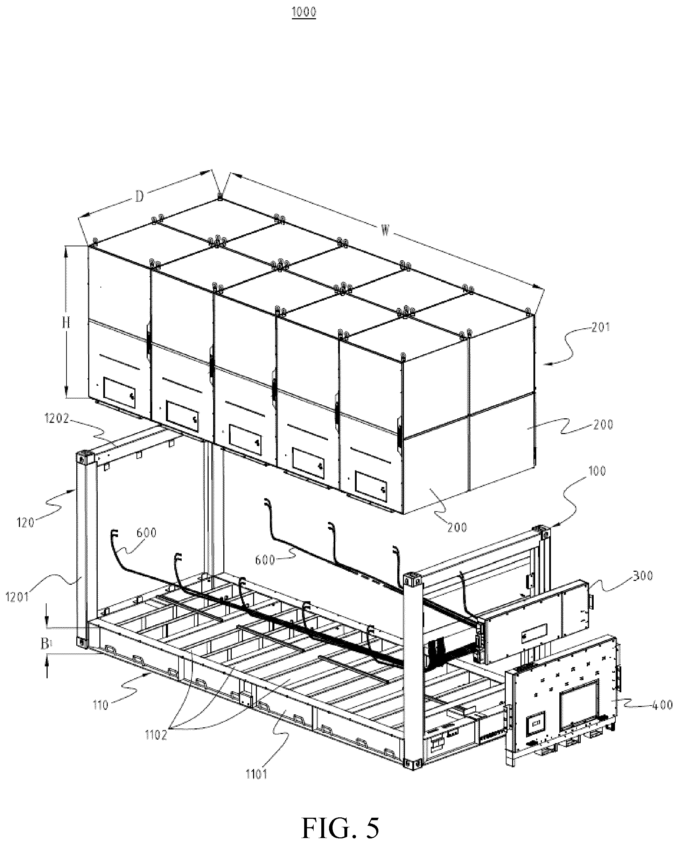

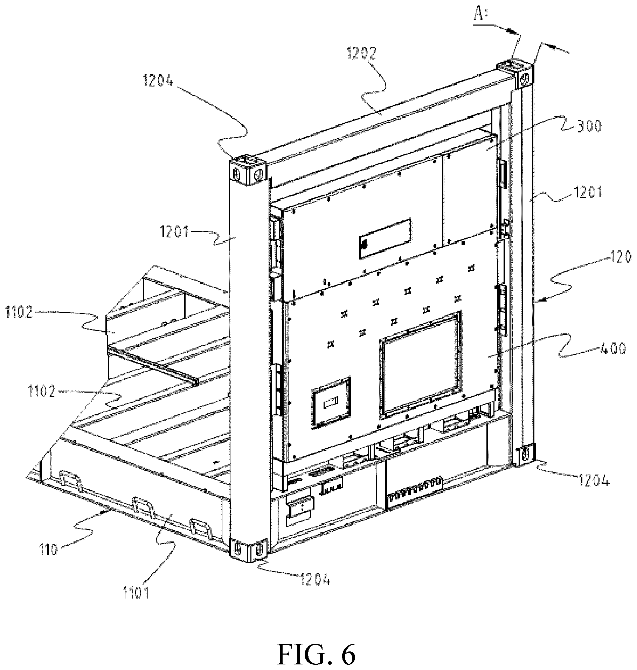

Referring to FIG. 1 to FIG. 6, an energy storage system 1000 includes a bearing frame 100, a battery assembly 201, a junction device 300, and a distribution device 400.

The energy storage system 1000 may usually be an industrial or commercial energy storage system. The battery assembly 201 included in the energy storage system 1000 may be set according to requirements. An outer contour of the bearing frame 100 is configured in a shape of a container, and the bearing frame 100 defines an accommodation space configured to accommodate and fix the battery assembly 201. In addition, a mounting portion 1206 is formed on the bearing frame 100, and is configured to mount at least one of the junction device 300 and the distribution device 400.

The distribution device 400 is adapted to connect an external load to provide electrical energy to the external load. The junction device 300 is adapted to electrically connect the battery assembly 201 and the distribution device 400. The battery assembly 201 usually includes multiple battery units, for example, the battery assembly 201 may include multiple battery cabinets 200. The multiple battery cabinets 200 are connected to the distribution device 400 through the junction device 300, and the distribution device 400 distributes power output uniformly. In other implementation modes, the battery assembly 201 may alternatively be in other forms, for example, including one battery cabinet 200. A contour of the battery cabinet 200 in this implementation mode may be similar to or the same as an overall contour formed by the multiple battery cabinets 200 in the foregoing implementation modes. An interior of one battery cabinet 200 in this implementation mode may include multiple battery assemblies. The multiple battery assemblies may be collected and connected to the distribution device 400 through the junction device 300, and the distribution device 400 distributes power output uniformly.

At least one of the distribution device 400 and the junction device 300 is mounted on the mounting portion 1206. Correspondingly, the distribution device 400 and/or the junction device 300 mounted on the mounting portion 1206 is at least partially located in the outer contour of the bearing frame 100, so as to ensure that the energy storage system 1000 has a regular contour as much as possible.

For clarity, the "outer contour" of the bearing frame 100 may be understood as a three-dimensional contour enclosed by outermost edges of the bearing frame 100. In consideration of factors such as mounting of the battery assembly 210 and a need for controlling weight of the bearing frame 100, the bearing frame 100 is usually not set as a closed cuboid-shaped box body (for example, a standard container), but is set as a basically regular cuboid-shaped frame structure according to the contour of the container. In this case, vertexes on the outermost side of the frame structure may be taken as control points of the outer contour of the frame structure, and the cuboid-shaped contour formed by connecting the multiple control points may be understood as the "outer contour" of the bearing frame 100. Meanwhile, the outer contour of the bearing frame 100 will refer to general manufacturing and usage requirements of the container, allowing an error and a tolerance within an appropriate range.

In the foregoing energy storage system 1000, the outer contour of the bearing frame 100 is configured in the shape of the container, the bearing frame 100 defines the accommodation space, and the battery assembly 201 is accommodated and fixed in the accommodation space. Meanwhile, the mounting portion 1206 is further formed on the bearing frame 100. At least one of the distribution device 400 and the junction device 300 is mounted on the mounting portion 1206 and is at least partially located in the outer contour of the bearing frame 100. In this way, the bearing frame 100 cannot only serve as a mounting frame of the energy storage system 1000 to accommodate and fix the battery assembly 201, the junction device 300, and the distribution device 400, but also directly serve as a container unit to participate in transportation when configured in the shape of the container, so that hierarchical simplification of structural components can be achieved, thereby improving a space utilization rate and improving energy density. Meanwhile, structures such as the battery assembly 201, the distribution device 300, and the junction device 400 still remain significant design freedom, which can still meet personalized designs of products while achieving unified contours. For example, in a case of basically the same contour, capacity, weight, structural strength, and the like of the energy storage system 1000 can still be adjusted by adjusting settings such as a structure of the battery assembly 201, an internal configuration of the bearing frame 100, and structural pieces of the bearing frame 100, thereby achieving product differentiation.

The outer contour of the bearing frame 100 is configured as the contour of the container. The container may be a non-standard container with an application scale, and may alternatively be a standard container. For example, the container may be a container with general international standards, so as to facilitate transportation and circulation of the energy storage system. The following describes by taking internationally recognized 20-foot standard container and 40-foot standard container as examples respectively. It may be understood that, as long as a purpose of facilitating transportation and circulation can be achieved, the bearing frame may alternatively be set with reference to national standards, regional standards, and company standards, and has universality and interchangeability.

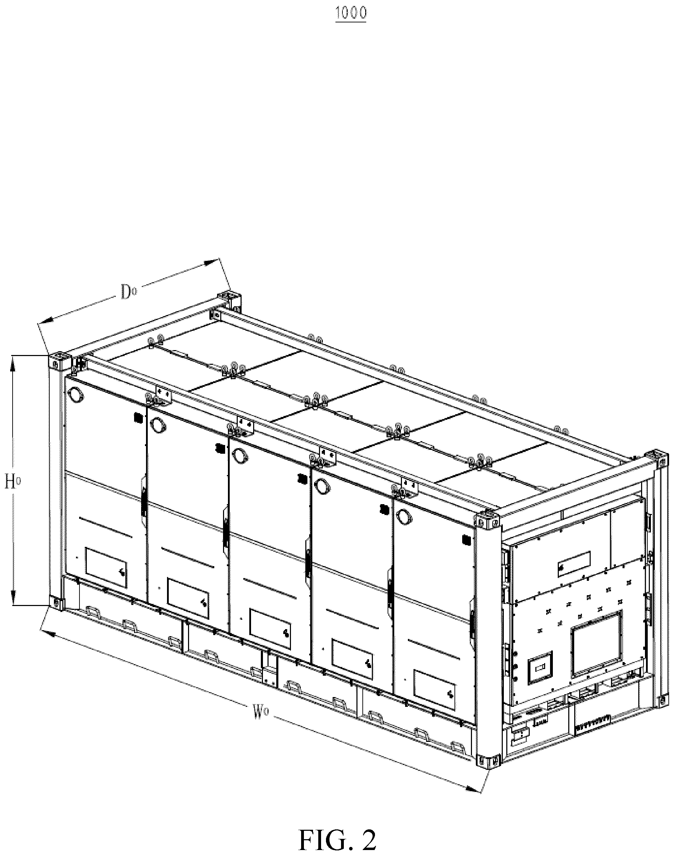

For example, in some implementation modes, the container is a 20-foot standard container. The 20-foot standard container is defined with contour dimensions: a length of 6058 mm, a height of 2591 mm (a height of a high cube is 2896 mm), and a depth of 2438 mm. Therefore, as shown in FIG. 2, the outer contour of the bearing frame 100 may be set with reference to the 20-foot standard container, and the outer contour of the bearing frame 100 is defined with a width dimension WO, a depth size D0, and a height dimension H0, where WO=6058 mm, D0=2438 mm, and H0=2896 mm. Correspondingly, the battery assembly 201 is cuboid-shaped and is defined with a width dimension W, a depth dimension D, and a height dimension H, which satisfy: 5000 mm≤W≤5958 mm, 2200 mm≤D≤2438 mm, and 2191 mm≤H≤2746 mm.

In some other implementation modes, the container may alternatively be a 40-foot standard container. Similarly, the 40-foot standard container is defined with fixed contour dimensions: a length of 12192 mm, a height of 2591 mm (a height of a high cube is 2896 mm), and a depth of 2438 mm. To simplify variables, referring to FIG. 2, the outer contour of the bearing frame 100 may be set with reference to the 40-foot standard container, and the outer contour of the bearing frame 100 is defined with a width dimension WO, a depth size D0, and a height dimension H0, where WO=12192 mm, D0=2438 mm, and H0=2896 mm. Correspondingly, the battery assembly 201 is cuboid-shaped and is defined with a width dimension W, a depth dimension D, and a height dimension H, which satisfy: 11138 mm≤W≤12096 mm, 2200 mm≤D≤2438 mm, and 2191 mm≤H≤2746 mm.

The contour dimensions of the battery assembly 201 are smaller than those of the bearing frame 100 to reserve a space for a structural design of the bearing frame 100 and ensure that the bearing frame 100 may protect the battery assembly 201 after the battery assembly 201 is mounted to the bearing frame 100.

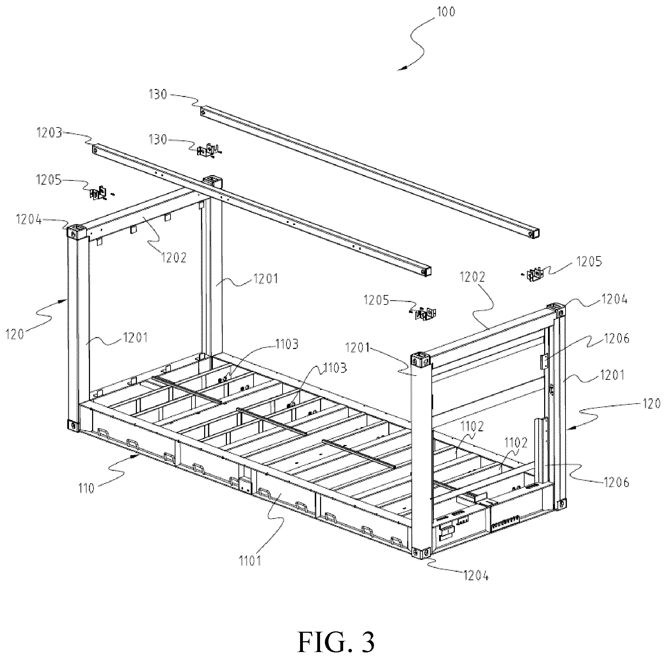

Referring to FIG. 3, FIG. 5, and FIG. 6, in some implementation modes, the bearing frame 100 may include a bottom bracket 110 and two end frames 120.

The bottom bracket 110 is configured to bear the battery assembly 201 and defines two opposite sides of the battery assembly 201. The bottom bracket 110 has a length direction, a width direction, and a height direction that are orthogonal to one another. The bottom bracket 110 supports a bottom of the battery assembly 201 to limit the battery assembly 201 in the height direction. In a specific implementation, the bottom of the battery assembly 201 may be connected and fixed to the bottom bracket 110 through a connecting member. In this way, the bottom bracket 110 may limit the battery assembly 201 in a horizontal direction.

In the length direction, the width direction, and the height direction, the height direction may be understood as a vertical direction. Generally, in practical applications, the height direction of the energy storage system 1000 after being placed or mounted is the vertical direction. Therefore, to facilitate understanding, a direction of the energy storage system 1000 that is the same as the vertical direction in a normal use state is defined as the height direction of the energy storage system 1000. Correspondingly, the length direction and the width direction of the energy storage system 1000 are defined in the horizontal direction. The width direction may be understood as a depth direction of the energy storage system 1000. The length direction may be understood as being consistent with the length direction of the energy storage system 1000.

The two end frames 120 are oppositely arranged on two sides of the bottom bracket 110 in the length direction and are configured to define the other two opposite sides of the battery assembly 201.

The bottom bracket 110 needs to meet a load bearing requirement, and meanwhile, occupation of an overall space by the bottom bracket 110 needs to be controlled. In some implementation modes, the bottom bracket 110 is defined with a height dimension B1, which satisfies: 150 mm≤B1≤400 mm.

In some implementation modes, the end frame 120 may specifically include two longitudinal beams 1201 and a cross beam 1202. The two longitudinal beams 1201 extend in the height direction and are spaced away on the two sides of the bottom bracket 110 in the width direction. One end of the longitudinal beam 1201 is connected to the bottom bracket 110. The cross beam 1202 is connected between the other ends of the two longitudinal beams 1201. In other words, the two longitudinal beams 1201 form two upright posts. A lower end of the upright post may be roughly flush with a lower end face of the bottom bracket 110 and is fixedly connected to a side surface of the bottom bracket 110. The cross beam 1202 is connected between upper ends of the two upright posts, so as to form the end frame 120. The two end frames 120 are clamped on two opposite sides of the battery assembly 201.

In a specific implementation, the longitudinal beam 1201 is defined with a dimension A1 in the length direction, which satisfies: 50 mm≤A1≤80 mm. A dimension of the cross beam 1202 in the length direction does not exceed the dimension A1 of the longitudinal beam 1201. Thus, the end frame 120 has appropriate constraint strength, and does not occupy excessive space.

The two longitudinal beams 1201, the cross beam 1202, and the bottom bracket 110 are enclosed to form a mounting space, and the mounting portion 1206 is arranged on an inner wall of at least one of the longitudinal beams 1201. The two longitudinal beams 1201, the cross beam 1202, and the bottom bracket 110 are enclosed on a periphery to form a frame with a mounting space in a center. At least one of the distribution device 400 and the junction device 300 is mounted on the mounting portion 1206 and is at least partially located in the mounting space.

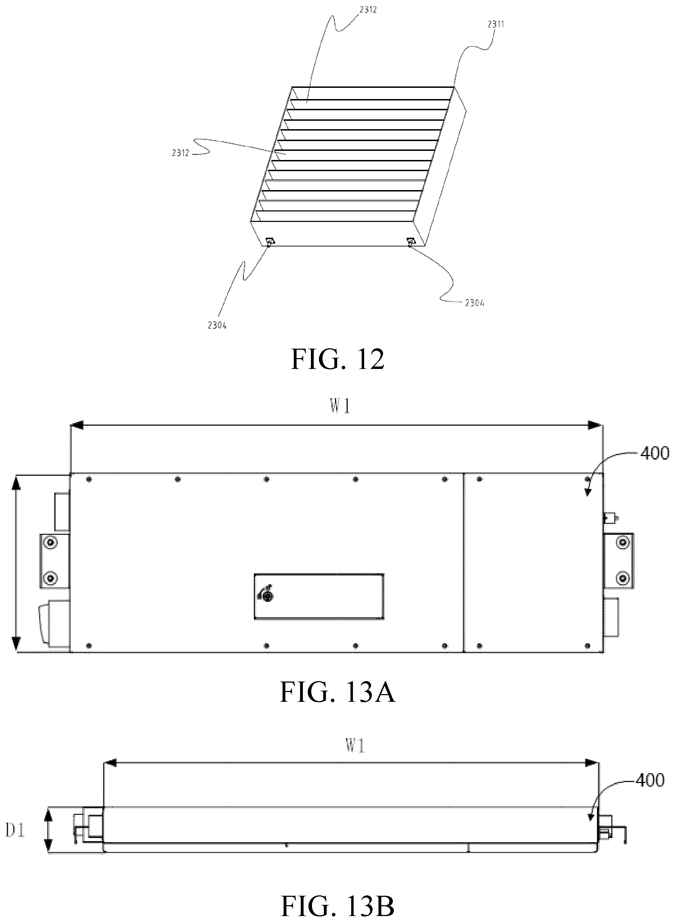

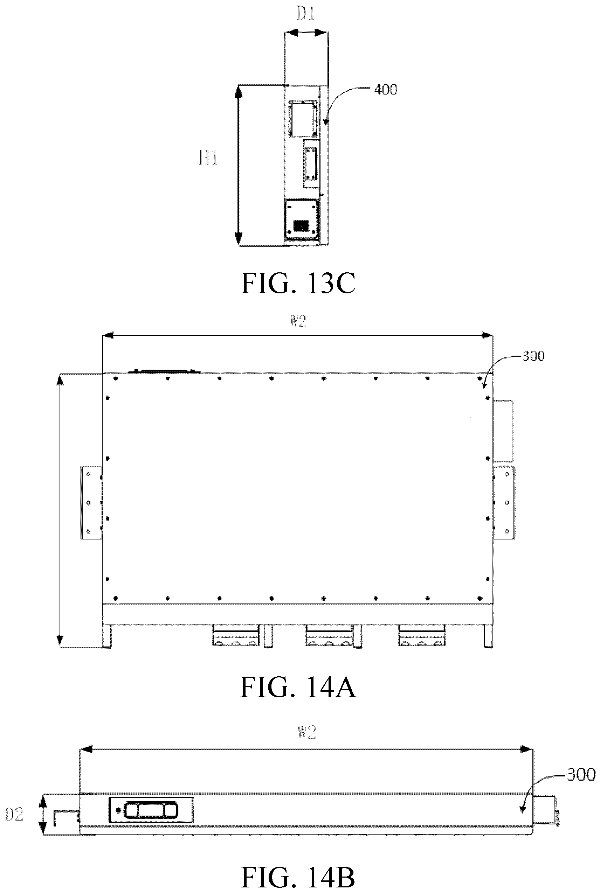

FIG. 13A, FIG. 13B, and FIG. 13C are schematic diagrams of dimensions of a distribution box according to the present disclosure.

Referring to FIG. 13A, FIG. 13B, and FIG. 13C, exemplarily, the distribution device is defined with a width dimension W1, a thickness dimension D1, and a height dimension H1, where 1750 mm≤W1≤1850 mm, 100 mm≤D1≤300 mm, and 550 mm≤H1≤650 mm.

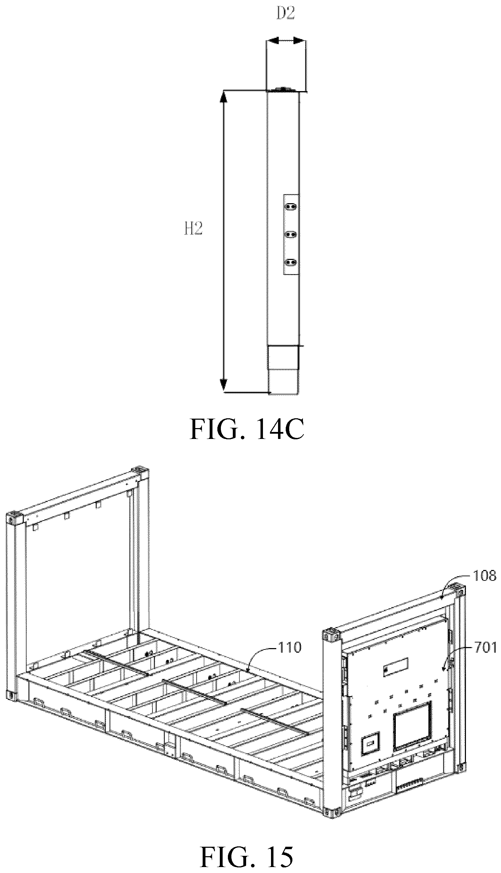

FIG. 14A, FIG. 14B, and FIG. 14C are schematic diagrams of dimensions of a junction box according to the present disclosure.

Referring to FIG. 14A, FIG. 14B, and FIG. 14C, exemplarily, the junction device is defined with a width dimension W2, a thickness dimension D2, and a height dimension H2, where 1750 mm≤W2≤1850 mm, 100 mm≤D2≤300 mm, and 925 mm≤H2≤1125 mm.

In the present disclosure, the dimensions of the distribution box and the junction box according to the above-mentioned examples are taken as examples for description. In a practical application process, optionally, the dimensions of the distribution box and the junction box may be set according to requirements, and values of specific dimensions are not limited in the present disclosure.

FIG. 15 is a schematic structural diagram of an energy storage device according to the present disclosure.

Referring to FIG. 15, optionally, if a distribution device and a junction device are arranged in a space formed by the two longitudinal beams 1201, the cross beam 1202, and the bottom bracket 110. The distribution device and the junction device according to the present disclosure may be mixed and arranged in a box body. That is, the energy storage device includes a distribution junction box 701. The distribution junction box 701 includes the distribution device and the junction device.

In the present disclosure, in a case that the distribution device and the junction device are located in the same box body, a wire between the distribution device and the junction device is located inside the box body, which can prevent the wire between the distribution device and the junction device from being eroded by an external environment, reduces maintenance costs of circuits, and prolongs service life of the circuits.

In the present disclosure, dimensions of the distribution junction box may be set according to requirements.

In the present disclosure, optionally, a thickness D3 of the distribution junction box 701 may be less than or equal to a thickness A1 of a first corner post. Similar to the embodiment shown in FIG. 3, the thickness D3 of the distribution junction box 701 is used for indicating a dimension of the distribution junction box 701 in a length direction of a base, and the thickness A1 of the first corner post is used for indicating the dimension of the first corner post in the length direction of the base.

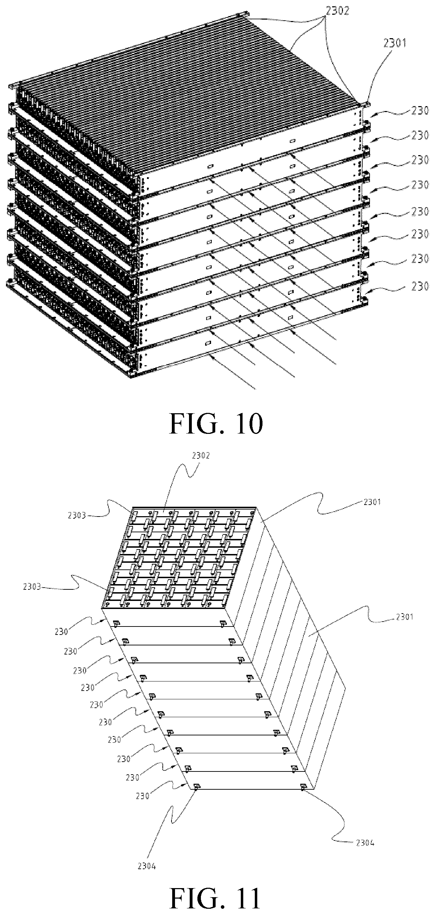

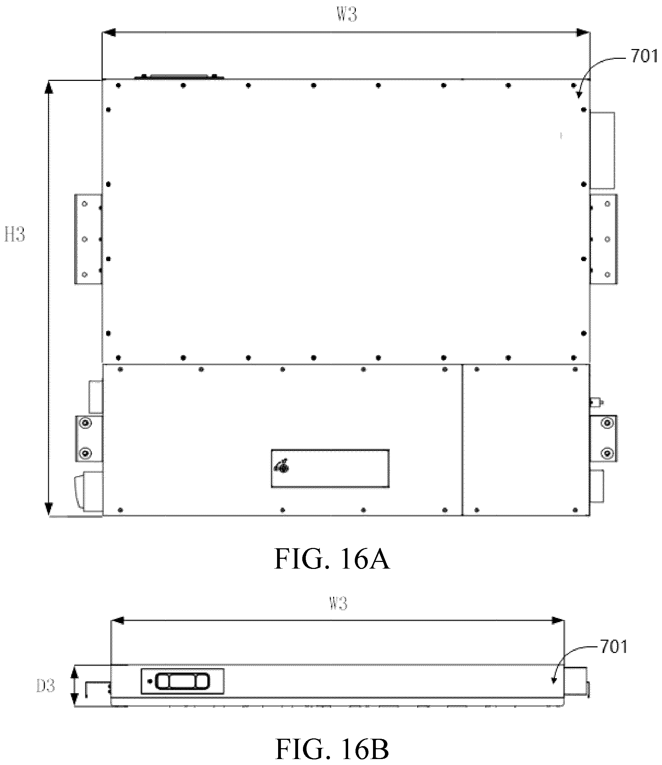

FIG. 16A, FIG. 11B, and FIG. 11C are schematic diagrams of dimensions of a distribution junction box according to the present disclosure.

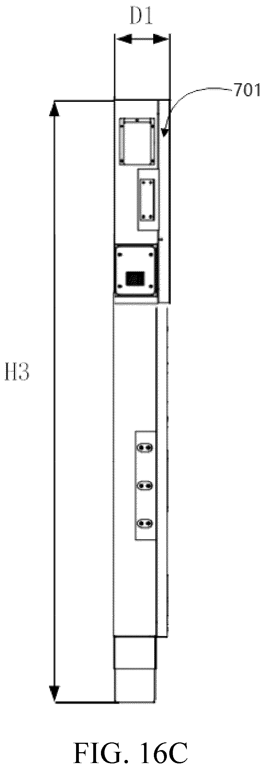

Referring to FIG. 16A, FIG. 11B, and FIG. 11C, exemplarily, as shown in FIG. 16, the distribution junction box is defined with a width dimension W3, a thickness dimension D3, and a height dimension H3, where 1750 mm≤W3≤1850 mm, 100 mm≤D3≤300 mm, and 1475 mm≤H3≤1775 mm.

In the present disclosure, the dimensions of the distribution junction box 701 according to the above-mentioned examples are taken as examples for description. In a practical application process, optionally, the dimensions of the distribution junction box 701 may be set according to requirements, and values of specific dimensions are not limited in the present disclosure.

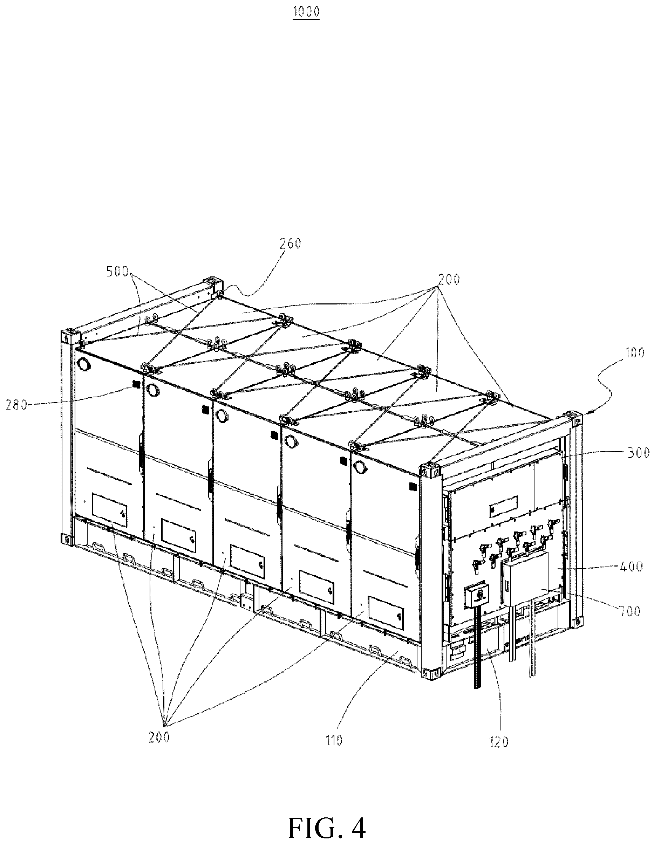

In a specific implementation, both the distribution device 400 and the junction device 300 may be mounted through the mounting portion 1206. Both the distribution device 400 and the junction device 300 may be located in the mounting space. In other words, both the distribution device 400 and the junction device 300 are located in the mounting space, and the distribution device 400 and the junction device 300 do not protrude from an end face of the longitudinal beam 1201. Thus, the energy storage system 1000 can be maintained in the contour of the container defined by the bearing frame 100 to facilitate transportation, and various devices can be protected by using the bearing frame 100. Referring to FIG. 4, the distribution device 400 and the junction device 300 may be pre-mounted in the end frame 120. After the energy storage system 1000 is transported and mounted to a determined site, a protective box 700 is mounted outside the distribution device 400 and the junction device 300. After being mounted, an outer end face of the protective box 700 may be higher than the outer end face of the longitudinal beam 1201 because transportation is not affected at this moment.

The bottom bracket 110 may include two side plates 1101 and multiple reinforcing plates 1102, which form a roughly cuboid-shaped base together. The two side plates 1101 may be arranged in parallel and extend in the length direction. The multiple reinforcing plates 1102 are spaced away from each other, and two ends of the reinforcing plate 1102 are respectively connected to inner walls of the two side plates 1101. The two side plates 1101 and the multiple reinforcing plates 1102 form a roughly cuboid-shaped base together. In a specific implementation, a wire hole 1103 is formed in the reinforcing plate 1102. A cable 600 of the battery assembly 201 may be led out to the junction device 300 through a gap between the reinforcing plates 1102 and the wire hole 1103. Folded edges may be provided at bottoms of the side plates 1101 and the reinforcing plates 1102, so as to facilitate supporting the battery assembly 201 born on the side plates 1101 and the reinforcing plates 1102.

Referring to FIG. 1 to FIG. 3, in some implementation modes, the bearing frame 100 further includes a top beam 130. The top beam 130 is connected between the two end frames 120 and is arranged opposite to the bottom bracket 110 to define an upper side of the battery assembly 201. For example, in a specific implementation, an upper part of the battery assembly 201 may be fixedly connected to the top beam 130 through a connecting member. The longitudinal beam 1201 may be connected to the cross beam 1202, and the longitudinal beam 1201 may be connected to the bottom bracket 110 through corner pieces 1204 arranged at vertexes of the contour of the container. Two ends of the top beam 130 may respectively be connected between the cross beams 1202 of the two end frames 120 through fasteners 1205. The corner pieces 1204 may adopt a standard corner piece with classification society certification.

Referring to FIG. 1, FIG. 2, FIG. 4, and FIG. 5, in some implementation modes, the battery assembly 201 may include multiple battery cabinets 200. The multiple battery cabinets 200 are arranged in multiple rows in the length direction and/or arranged in multiple columns in the width direction and fill the accommodation space formed by the bearing frame 100. The multiple battery cabinets 200 may be the same units, and may be arranged in one row and multiple columns, one column and multiple rows, and multiple columns and multiple rows as a whole according to settings of contour dimensions. The multiple battery cabinets 200 may divide the accommodation space equally.

It may be understood that, in some implementation modes, the battery assembly 201 may alternatively include only one battery cabinet 200, as long as the battery cabinet 200 can fill the accommodation space.

In some implementation modes, the battery cabinet 200 is cuboid-shaped and is defined with a width dimension W1, a depth dimension D1, and a height dimension H1, which satisfy: 1000 mm≤W1≤1192 mm, and a single battery cabinet is defined with a depth 1100 mm≤D1≤1219 mm and a height dimension 1850 mm≤H1≤2746 mm. Width directions of the multiple battery cabinets 200 are arranged in the length direction of the battery assembly 201.

The battery cabinet 200 may include a cabinet body 210, multiple battery units 230, a temperature adjusting device 240, and a battery management device 250.

The cabinet body 210 is internally provided with an accommodation cavity. The multiple battery units 230 is arranged in the accommodation cavity. The temperature adjusting device 240 is arranged in the accommodation cavity and is configured to perform heat exchange with an exterior of the cabinet body 210 to adjust temperatures of the multiple battery units 230. The battery management device 250 may alternatively be arranged in the accommodation cavity, electrically connected to the multiple battery units 230, and configured for charge/discharge management of the battery units 230.

Referring to FIG. 4, in some implementation modes, the battery assembly 201 includes multiple battery cabinets 200 arranged in multiple rows in the length direction and arranged in multiple columns in the width direction. Lifting lugs 260 are arranged at corners of a top of the battery cabinet 200. The lifting lugs 260 can facilitate lifting of the battery cabinet 200. Correspondingly, the energy storage system 1000 may further include multiple pull rods 500. In the width direction, the pull rods 500 are connected to the lifting lugs 260 on diagonal lines of adjacent battery cabinets 200 in the width direction. Thus, the battery cabinets 200 can be fixed to each other in the width direction, and can be constrained and fixed by the two end frames 120 in the length direction. It may be understood that connections of the pull rods 500 may be correspondingly adjusted according to a quantity and an arrangement form of the battery cabinets 200, which fall within a concept of the present disclosure.

In a specific implementation, an opening may be provided in one side of the cabinet body 210. The battery cabinet 200 further includes a cabinet door 220. The cabinet door 220 is movably connected to the cabinet body 210 to open or close the opening. The cabinet door 220 is arranged, which can facilitate operations such as mounting, overhauling, and maintaining of the battery cabinet 200.

The temperature adjusting device 240 may be mounted on the cabinet door 220. In a specific implementation, the temperature adjusting device 240 may be an air conditioner, that is, the battery cabinet 200 dissipates heat in an air cooling form. The temperature adjusting device 240 may alternatively be a water cooling device. A heat exchange portion of the water cooling device may alternatively be arranged on the cabinet body 220. The following describes by taking the temperature adjusting device 240 being an air cooled air conditioner as an example.

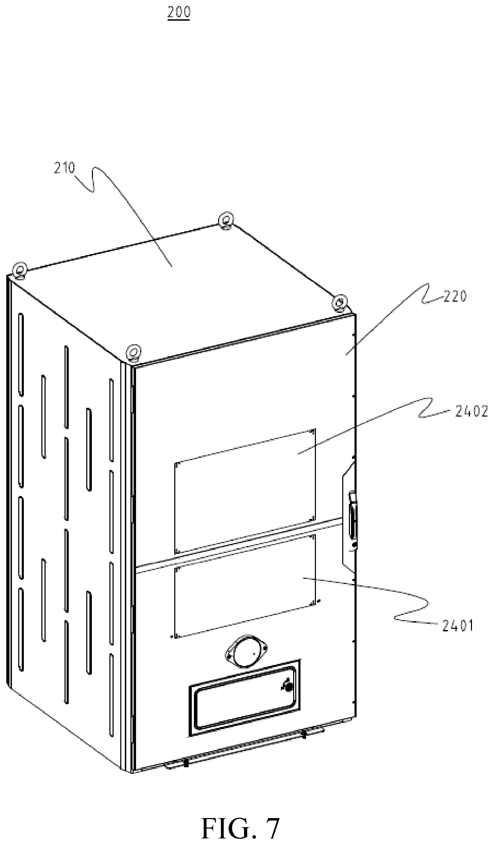

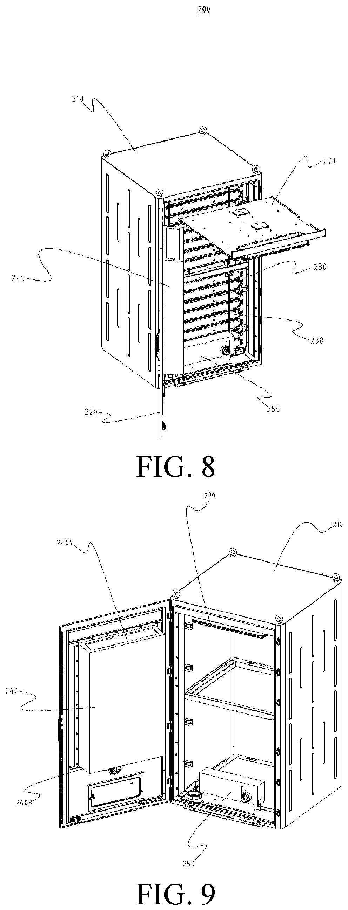

For example, as shown in FIG. 7 to FIG. 10, in some implementation modes, the battery units 230 in the battery cabinet 200 are cell layers. To facilitate understanding, a subsequent cell layer and the battery unit 230 adopt the same number. The battery cabinet 200 includes at least two cell layers 230. The at least two cell layers 230 are arranged in the cabinet body 210 and are arranged in the height direction. Each cell layer 230 includes a shelf, and each direction of the length direction and the height direction includes at least one cell 2302. An air duct is formed between two adjacent cell layers 230, and is configured to circulate a cooling airflow.

The temperature adjusting device 240 is an air cooling device and include an external circulation air inlet 2401, an external circulation air outlet 2402, an internal circulation air inlet 2403, and an internal circulation air outlet 2404. Both the external circulation air inlet 2401 and the external circulation air outlet 2402 are adapted to be communicated with external atmosphere; and both the internal circulation air inlet 2403 and the internal circulation air outlet 2404 are communicated with the accommodation cavity.

An air guide duct is provided in a top in the accommodation cavity, and one end of the air guide duct is communicated with the internal circulation air outlet 2404 and is configured to guide an airflow blown from the internal circulation air outlet 2404 to flow through the battery units 230.

For example, the battery cabinet 200 further includes an air guide piece 270 arranged at the top in the accommodation cavity, and the air guide piece 270 matches the cabinet body to form an air guide channel. The air guide channel is configured to guide the airflow blown from the internal circulation air outlet 2404 to a side of the battery unit 230 away from the cabinet door 220. In other words, cold air blown from the temperature adjusting device 240 into the cabinet body 210 is guided to rear sides of the multiple battery units 230 through the air guide piece 270 at the top, and enters the air ducts between the cell layers 230 in sequence from top to bottom to cool the cells 2302.

In some implementation modes, the air guide channel is further configured to guide the airflow blown from the internal circulation air outlet 2404 to at least one side of the battery unit 230 adjacent to the cabinet door 220. In short, the air guide piece 270 does not only guide the cooling airflow to the rear sides of the battery units 230, but also simultaneously guides the cooling airflow to a left side and a right side of the battery unit 230.

An explosion-proof valve 280 is arranged on the cabinet door. An interior of the cabinet body 210 may be communicated with the external atmosphere when the explosion-proof valve 280 is open.

Referring to FIG. 11 and FIG. 12, in another embodiment, the battery cabinet 200 may basically be implemented with reference to a foregoing mode, with the only difference that implementation modes of the battery unit (that is, the cell layer) 230 and the temperature adjusting device 240 inside the cabinet body 210 are different, and the foregoing air guide piece 270 does not exist. Therefore, content of the same parts is not repeated in this embodiment. Only the cell layer 230 and the temperature adjusting device 240 are described.

In this embodiment, the battery cabinet 200 includes multiple stacked battery units 230. The battery unit 230 includes a shelf 2301 and multiple cells 2302. Multiple battery accommodation areas are formed in the shelf 2301. The multiple cells 2302 are respectively accommodated in the battery accommodation areas. A liquid cooling channel is formed in the shelf 2301. The liquid cooling channel is configured to circulate a cooling medium to cool the cell 2302. Correspondingly, the temperature adjusting device 240 may be a heat exchange assembly of a liquid cooling device. A water inlet/outlet pipe 2304 is arranged on the shelf 2301. The liquid cooling channel inside the shelf 2301 is communicated with the heat exchange assembly through the water inlet/outlet pipe 2304, so as to cool the cell 2302 through a liquid cooling solution.

For example, in some implementation modes, the shelf 2301 may include a tray 2311 and multiple partition plates 2312. One end of the tray 2311 is open, that is, the tray 2311 forms a housing with an opening in one side. The multiple partition plates 2312 are arranged in the tray 2311 to partition an interior of the tray 2311 into the multiple battery accommodation areas. The liquid cooling channel is formed in the tray 2311 and at least part of the partition plates 2312. In a specific implementation, the water inlet/outlet pipe 2304 may be arranged on the tray 2311. The liquid cooling channel is formed in part partition plates 2312 or all partition plates 2312. The partition plates 2312 are in contact with the cells 2302 in the battery accommodation areas, which can achieve constrained positioning and liquid cooling heat dissipation simultaneously.

In the cell 230, a terminal of the cell 2302 may face an open end of the tray 2311, and the terminals of the multiple cells 2302 are electrically connected through connecting pieces 2303, so that a series connection or a parallel connection between the cells 2302 has been achieved.

In the multiple stacked battery units 230, the tray 2311 of the battery unit 230 located on an upper layer may be configured to seal the open end of the tray 2311 of an adjacent battery unit 230 on a lower layer. The battery cabinet 200 further includes an upper cover (not shown in the drawings), configured to seal the open end of the tray 2311 of the battery unit 230 located on an uppermost layer.

In the description of the present disclosure, it is to be understood that orientation or position relationships indicated by the terms such as "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", and "circumferential" are based on orientation or position relationships shown in the accompanying drawings, and are used only for ease and brevity of illustration and description, rather than indicating or implying that the mentioned device or component have to have a particular orientation or have to be constructed and operated in a particular orientation. Therefore, such terms cannot be construed as a limitation to the present disclosure.

In addition, terms "first" and "second" are used merely for the purpose of description, and cannot be construed as indicating or implying relative importance or implying a quantity of indicated technical features. Therefore, features limited by "first" or "second" may explicitly or implicitly include one or more of the features. In the descriptions of the present disclosure, "multiple" means two or more, unless otherwise definitely and specifically limited.

In the present disclosure, unless otherwise explicitly specified or defined, the terms such as "install", "connect", "connection", and "fix" will be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two components, or an interaction relationship between two components. Those of ordinary skill in the art may understand the specific meanings of the foregoing terms in the present disclosure according to specific situations.

In the present disclosure, unless otherwise explicitly specified or defined, the first feature being located "above" or "below" the second feature may be the first feature being in direct contact with the second feature, or the first feature being in indirect contact with the second feature through an intermediate medium. Moreover, the first feature being "above", "over", or "on" the second feature may indicate that the first feature being directly above or obliquely above the second feature, or may merely indicate that a horizontal height of the first feature is higher than that of the second feature. The first feature being "below", "under", and "beneath" the second feature may be that the first feature being right below or obliquely below the second feature, or may merely indicate that the horizontal height of the first feature is lower than that of the second feature.

In the descriptions of this specification, descriptions of reference terms such as "an embodiment", "some embodiments", "example", "specific example", or "some examples" means that a specific features, structures, materials, or characteristics that are described with reference to the embodiment or the example are included in at least one embodiment or example of the present disclosure. In this specification, schematic descriptions for the foregoing terms are not necessarily refer to the same embodiments or examples. Moreover, the described specific features, structures, materials or characteristics may be combined in proper manners in any one or more embodiments or examples. In addition, those skilled in the art may integrate or combine different embodiments or examples and features of the different embodiments or examples described in the specification without conflicting with each other.

Although the embodiments of the present disclosure have been shown and described above, it may be understood that, the above-mentioned embodiments are exemplary and are not to be understood as a limitation to the present disclosure. Those of ordinary skill in the art can make changes, modifications, replacements, or variations to the above-mentioned embodiments within the scope of the present disclosure.

## Claims

1. An energy storage system, comprising a battery assembly, the energy storage system further comprising:
a bearing frame, an outer contour of the bearing frame being configured in a shape of a container and defining an accommodation space configured to accommodate and fix the battery assembly, and a mounting portion being formed on the bearing frame;
a distribution device, adapted to connect an external load to provide electrical energy to the external load; and
a junction device, adapted to electrically connect the battery assembly and the distribution device,
at least one of the distribution device and the junction device being mounted on the mounting portion and being at least partially located in the outer contour.

2. The energy storage system according to claim 1, wherein the container is a 20-foot standard container.

3. The energy storage system according to claim 2, wherein the battery assembly is in a cuboid shape and is defined with a width dimension W, a depth dimension D, and a height dimension H, which satisfy: 5000 mm≤W≤5958 mm, 2200 mm≤D≤2438 mm, and 2191 mm≤H≤2746 mm.

4. The energy storage system according to any one of claims 1 to 3, wherein the container is a 40-foot standard container.

5. The energy storage system according to claim 4, wherein the battery assembly is in a cuboid shape and is defined with a width dimension W, a depth dimension D, and a height dimension H, which satisfy: 11138 mm≤W≤12096 mm, 2200 mm≤D≤2438 mm, and 2191 mm≤H≤2746 mm.

6. The energy storage system according to any one of claims 1 to 5, wherein the bearing frame comprises:
a bottom bracket, configured to bear the battery assembly and defining two opposite sides of the battery assembly, wherein the bottom bracket has a length direction, a width direction, and a height direction that are orthogonal to one another; and
two end frames, wherein the two end frames are oppositely arranged on two sides of the bottom bracket in the length direction and are configured to define the other two opposite sides of the battery assembly.

7. The energy storage system according to claim 6, wherein the bottom bracket is defined with a height dimension B1, which satisfies: 150 mm≤B1≤400 mm.

8. The energy storage system according to claim 6 or 7, wherein the end frame comprises:
two longitudinal beams, extending in the height direction and spaced away on the two sides of the bottom bracket in the width direction, wherein one end of the longitudinal beam is connected to the bottom bracket; and
a cross beam, connected between the other ends of the two longitudinal beams.

9. The energy storage system according to claim 8, wherein the distribution device and the junction device are arranged in a space formed by the two longitudinal beams, the cross beam, and the bottom bracket, and the energy storage system further comprises:
a distribution junction box, wherein the distribution junction box comprises a distribution device and a junction device.

10. The energy storage system according to claim 9, wherein the distribution junction box is defined with a width dimension W3, a thickness dimension D3, and a height dimension H3, wherein 1750 mm≤W3≤1850 mm, 100 mm≤D3≤300 mm, and 1475 mm≤H3≤1775 mm.

11. The energy storage system according to claim 8, wherein the longitudinal beam is defined with a dimension A1 in the length direction, which satisfies: 50 mm≤A1≤80 mm.

12. The energy storage system according to any one of claims 8 to 11, wherein the two longitudinal beams, the cross beam, and the bottom bracket are enclosed to form a mounting space, and the mounting portion is arranged on an inner wall of at least one of the longitudinal beams; and
at least one of the distribution device and the junction device is mounted on the mounting portion and is located in the mounting space.

13. The energy storage system according to claim 12, wherein both the distribution device and the junction device are located in the mounting space, and the distribution device and the junction device do not protrude from an outer end face of the longitudinal beam.

14. The energy storage system according to any one of claims 6 to 13, wherein the bottom bracket comprises:
two side plates, wherein the two side plates are arranged in parallel and extend in the length direction; and
a plurality of reinforcing plates, wherein the plurality of reinforcing plates are spaced away from each other, two ends of the reinforcing plate are respectively connected to inner walls of the two side plates, and a wire hole is formed in the reinforcing plate.

15. The energy storage system according to any one of claims 6 to 14, wherein the bearing frame further comprises a top beam, the top beam is connected between the two end frames and is arranged opposite to the bottom bracket to define an upper side of the battery assembly.

16. The energy storage system according to any one of claims 1 to 14, wherein the battery assembly comprises a plurality of battery cabinets, and the plurality of battery cabinets are arranged in a plurality of rows in the length direction and/or arranged in a plurality of columns in the width direction and fill the accommodation space.

17. The energy storage system according to claim 16, wherein the battery cabinet is in a cuboid shape and is defined with a width dimension W1, a depth dimension D1, and a height dimension H1, which satisfy: 1000 mm≤W1≤1192 mm, and a single battery cabinet is defined with a depth 1100 mm≤D1≤1219 mm and a height dimension 1850 mm≤H1≤2746 mm; and
width directions of the plurality of battery cabinets are arranged in the length direction of the battery assembly.

18. The energy storage system according to claim 16 or 17, wherein the battery cabinet comprises:
a cabinet body, internally provided with an accommodation cavity;
a plurality of battery units, arranged in the accommodation cavity;
a temperature adjusting device, arranged in the accommodation cavity and configured to perform heat exchange with an exterior of the cabinet body to adjust temperatures of the plurality of battery units; and
a battery management device, arranged in the accommodation cavity and electrically connected to the battery units.

19. The energy storage system according to claim 18, wherein the battery assembly comprises a plurality of battery cabinets arranged in a plurality of rows in the length direction and arranged in a plurality of columns in the width direction; and lifting lugs are arranged at corners of a top of the battery cabinet; and
the energy storage system further comprises a plurality of pull rods, and the pull rods are connected to the lifting lugs on diagonal lines of adjacent battery cabinets in the width direction.

20. The energy storage system according to claim 18 or 19, wherein an opening is provided in one side of the cabinet body; the battery cabinet further comprises a cabinet door, and the cabinet door is movably connected to the cabinet body to open or close the opening; and
the temperature adjusting device is mounted on the cabinet door.

21. The energy storage system according to any one of claims 18 to 20, wherein the temperature adjusting device is an air cooling device and comprises an external circulation air inlet, an external circulation air outlet, an internal circulation air inlet, and an internal circulation air outlet, both the external circulation air inlet and the external circulation air outlet are adapted to be communicated with external atmosphere, and both the internal circulation air inlet and the internal circulation air outlet are communicated with the accommodation cavity; and
an air guide duct is provided in a top in the accommodation cavity, and one end of the air guide duct is communicated with the internal circulation air outlet and is configured to guide an airflow blown from the internal circulation air outlet to flow through the battery units.

22. The energy storage system according to claim 21, wherein the battery cabinet further comprises an air guide piece arranged at the top in the accommodation cavity, and the air guide piece matches the cabinet body to form an air guide channel; and the air guide channel is configured to guide the airflow blown from the internal circulation air outlet to a side of the battery unit away from the cabinet door.

23. The energy storage system according to claim 22, wherein the air guide channel is further configured to guide the airflow blown from the internal circulation air outlet to at least one side of the battery unit adjacent to the cabinet door.

24. The energy storage system according to any one of claims 18 to 23, wherein the battery cabinet comprises at least two cell layers, the at least two cell layers are arranged in the cabinet body and are arranged in the height direction, and each cell layer comprises at least one cell in each of the length direction and the height direction.

25. The energy storage system according to any of claims 18 to 24, wherein an explosion-proof valve is arranged on the cabinet door.

26. The energy storage system according to any one of claims 18 to 25, wherein the battery cabinet comprises a plurality of stacked battery units, and the battery unit comprises:
a shelf, wherein a plurality of battery accommodation areas are formed in the shelf;
a plurality of cells, wherein the plurality of cells are respectively accommodated in the battery accommodation areas; and
a liquid cooling channel, formed in the shelf and configured to circulate a cooling medium to cool the cell.

27. The energy storage system according to claim 26, wherein the shelf comprises:
a tray, wherein one end of the tray is open; and
a plurality of partition plates, arranged in the tray to partition an interior of the tray into the plurality of battery accommodation areas,
wherein the liquid cooling channel is formed in the tray and at least part of the partition plates.

28. The energy storage system according to claim 27, wherein in the cell, a terminal of the cell faces an open end of the tray, and the terminals of the plurality of cells are electrically connected through connecting pieces.

29. The energy storage system according to claim 27 or 28, wherein in the plurality of stacked battery units, a tray of a battery unit located on an upper layer seals an open end of a tray of an adjacent battery unit on a lower layer; and
the battery cabinet further comprises an upper cover, configured to seal the open end of a tray of a battery unit located on an uppermost layer.

30. The energy storage system according to any one of claims 1 to 29, wherein the distribution device is defined with a width dimension W1, a thickness dimension D1, and a height dimension H1, wherein 1750 mm≤W1≤1850 mm, 100 mm≤D1≤300 mm, and 550 mm≤H1≤650 mm.

31. The energy storage system according to any one of claims 1 to 30, wherein the junction device is defined with a width dimension W2, a thickness dimension D2, and a height dimension H2, wherein 1750 mm≤W2≤1850 mm, 100 mm≤D2≤300 mm, and 925 mm≤H2≤1125 mm.
